# EUROPÄISCHE PATENTSCHRIFT

(11) **EP 3 293 021 B1**
(45) Veröffentlichungstag und Bekanntmachung des Hinweises auf die Patenterteilung: **18.12.2019**
(21) Anmeldenummer: 17188806.8
(22) Anmeldetag: 31.08.2017
(51) Int. Cl.: B60C 27/12

(54) **REIFENKETTE ZUR VEREINFACHTEN MONTAGE**
TYRE CHAIN FOR SIMPLIFIED INSTALLATION
CHAÎNE POUR PNEU À MONTAGE SIMPLIFIÉ

(30) Priorität: 09.09.2016 DE 102016217233
(43) Veröffentlichungstag der Anmeldung: 14.03.2018
(73) Patentinhaber: RUD Ketten Rieger & Dietz GmbH u. Co. KG, 73432 Aalen (DE)
(72) Erfinder: Rieger, Hansjörg, 73431 Aalen (DE); Sieber, Frank, 73432 Aalen (DE); Grimm, Anton, 73479 Ellwangen (DE); Schmidtke, Werner, 89174 Altheim (DE)
(74) Vertreter: Grünecker Patent- und Rechtsanwälte PartG mbB

(56) Entgegenhaltungen:
- EP-A1- 1 614 554
- EP-A1- 2 163 408
- JP-U- H0 632 114

## Beschreibung

Die Erfindung betrifft eine Reifenkette für einen Fahrzeugreifen eines Fahrzeugs mit einem elastisch dehnbaren Innenspannring, der bei montierter Reifenkette an einer dem Fahrzeug zugewandten Innenseite des Reifens angeordnet ist, wobei der Innenspannring an wenigstens einer Stelle mit einem Montagebügel versehen ist, dessen Biegesteifigkeit gegenüber dem Innenspannring erhöht ist, und wobei der Montagebügel eine Durchführung für den Innenspannring aufweist.

Reifenketten sind im Stand der Technik bekannt. Sie dienen zum Schutz eines Reifens, beispielsweise in rauer Umgebung und/oder als Gleitschutzketten auf rutschigen Untergründen, wie Schnee oder Eis. Moderne Reifenketten können einen elastisch dehnbaren Innenspannring, beispielsweise gebildet durch ein Gummiseil, aufweisen, welcher zur erleichterten Anbringung der Reifenkette an einem Fahrzeugreifen dienen kann. Der Innenspannring kann auch durch ein Seil oder eine Kette in Verbindung mit einem elastischen Element wie einem gummielastischen Seil oder einer Zugfeder gebildet sein. Bei der Montage wird zunächst der Innenspannring an der dem Fahrzeug zugewandten Innenseite des Reifens, also an der Innenflanke angeordnet. Anschließend kann die übrige Reifenkette über den Reifen gezogen werden. Eine solche Reifenkette der Anmelderin ist beispielsweise in der Druckschrift DE 10 2007 015764 gezeigt. Solche Reifenketten erleichtern die Montage an einem Fahrzeugreifen und weisen in der Regel ein geringes Packmaß auf. Nachteilig bei den bekannten Reifenketten ist jedoch, dass der Innenspannring bei der Montage unter Umständen von der Innenseite des Reifens abrutschen kann und erneut angebracht werden muss.

Aus der EP 2 163 408 A1 ist eine Gleitschutzkette bekannt, bei der Felgenschutzabdeckungen vorgesehen sind, die an Verbindungsstellen zwischen Seitensträngen und einem Innenstrang angebracht sein können oder selber die Verbindung herstellen. Aus der EP 1 614 554 A1 ist ein Montagebügel bekannt, der als Teil der Reifenkette Seitenstränge mit einem Innenspannring verbindet.

Es ist daher Aufgabe der Erfindung, eine Reifenkette der oben genannten Art bereitzustellen, die die Montage der Reifenkette an einem Fahrzeugreifen weiter verbessert.

Diese Aufgabe ist für die erfindungsgemäße Reifenkette dadurch gelöst, dass die Durchführung an wenigstens einer Stelle unterbrochen ist und wenigstens eine Befestigungsstelle für Gleitschutzmittel freigibt. Für den erfindungsgemäßen Nachrüstsatz ist die erfindungsgemäße Aufgabe dadurch gelöst, dass der Nachrüstsatz einen Montagebügel umfasst, wobei der Montagebügel zur Verbindung mit dem Innenspannring ausgebildet ist und zwei sich voneinander weg erstreckende Schenkel aufweist, die relativ zueinander nicht frei beweglich sind.

Die erfindungsgemäße Lösung löst die obengenannte Aufgabe. Der wenigstens eine Montagebügel, dessen Biegesteifigkeit gegenüber dem Innenspannring erhöht ist, kann dazu dienen, den Innenspannring an der Innenseite des Reifens zu halten, während die Reifenkette über den Reifen gezogen wird. Dazu sollte wenigstens eine Stelle, die mit einem Montagebügel versehen ist, zuerst an der Innenseite des Reifens aufgelegt werden, bevor die restliche Reifenkette über den Reifen gezogen wird. Dadurch, dass der Montagebügel eine höhere Biegesteifigkeit als der Innenspannring aufweist, ist er im Vergleich zum Innenspannring starr und kann den Innenspannring an der Innenseite des Reifens halten. Der wenigstens eine Montagebügel kann dabei auch den Innenspannring an der Innenseite des Reifens aufspannen, wodurch der Innenspannring den Reifen soweit hintergreifen kann, dass er sich beim Aufziehen der Reifenkette über den Reifen nicht wieder ablöst. Darüber hinaus erleichtert der wenigstens eine Montagebügel die Montage der Reifenkette dadurch, dass zur Montage nicht so weit hinter den Reifen gegriffen werden muss, um die Reifenkette anzubringen.

Durch die Durchführung kann der Innenspannring durch den Montagebügel geführt und durch diesen fortgesetzt werden.

Die erfindungsgemäße Reifenkette kann auch durch das nachträgliche Anbringen der erfindungsgemäßen Montagebügel an einer Reifenkette erhalten werden. Der Montagebügel kann insbesondere Teil eines Nachrüstsatzes sein, der im Folgenden beschrieben, aber nicht Teil der beanspruchten Erfindung ist.

Der eingangs genannte erfindungsgemäße Nachrüstsatz für die Reifenkette löst die erfindungsgemäße Aufgabe dadurch, dass der Montagebügel wegen der relativ zueinander nicht frei beweglichen Schenkel eine höhere Biegesteifigkeit aufweist als ein Innenspannring, sobald der Montagebügel an einer Reifenkette mit einem solchen montiert ist.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen.

Gemäß einer ersten vorteilhaften Ausgestaltung kann der Montagebügel zwei Schenkel aufweisen. Durch die zwei Schenkel kann der Innenspannring besonders sicher an der Innenseite des Reifens gehalten sein. Ebenso kann es vorteilhaft sein, wenn der Innenspannring mit den Schenkeln verbunden ist, da die Schenkel den Innenspannring aufspannen können. Bevorzugt sind die Schenkel in einem flachen Winkel, also zwischen 90 und 180° zueinander angeordnet. Die beiden Schenkel können gleich oder unterschiedlich lang sein.

Die Kontur des Montagebügels mit zwei Schenkeln kann dem Innenspannring folgen. Das heißt, die beiden Schenkel erstrecken sich im Wesentlichen entlang einer Umfangsrichtung des Reifens. Die beiden Schenkel können gerade oder gebogen sein. Im montierten Zustand kann ein Scheitelpunkt der beiden Schenkel in Richtung zur nächstgelegenen Stelle der Reifenlauffläche weisen, während die beiden Schenkelenden sich davon weg erstrecken.

Der Montagebügel mit den zwei Schenkeln kann beispielsweise die Form eines Teilkreises aufweisen. Andere bevorzugte Formen sind die U-Form oder die V-Form. Zwischen den beiden Schenkeln kann ein zusätzlicher Steg angeordnet sein, der die beiden Schenkel voneinander beabstandet. Der Steg selbst kann gerade, gebogen oder auf andere Weise geformt sein.

Um die Reifenkette besonders sicher am Reifen zu halten, kann die Reifenkette wenigstens zwei Montagebügel aufweisen, die in einer Umfangsrichtung, also einer Umlaufrichtung der Reifenkette bzw. des Reifens, hintereinander angeordnet sind. Die zwei Montagebügel können wiederholt lösbar miteinander verbunden sein. Vorteilhaft ist es zudem, wenn die wenigstens zwei Montagebügel unverlierbar miteinander verbunden sind. Um ein geringes Packmaß der Reifenkette zu erreichen, können die wenigstens zwei Montagebügel zueinander klappbar sein.

Die Reifenkette kann Gleitschutzmittel aufweisen, die im montierten Zustand auf der Reifenlauffläche aufliegen, wobei der Montagebügel mit wenigstens einer Befestigungsstelle für Gleitschutzmittel versehen ist. Gleitschutzmittel können beispielsweise Querstränge der Reifenkette sein. An der wenigstens einen Befestigungsstelle können Gleitschutzmittel mit dem Montagebügel oder mit dem Innenspannring im Bereich des Montagebügels befestigt werden. Ein Vorteil der Befestigungsstelle für Gleitschutzmittel ist der, dass beim Auflegen der Reifenkette auf den Reifen, wobei der wenigstens eine Montagebügel an der Innenseite des Reifens angeordnet wird, bereits wenigstens ein Gleitschutzmittel auf die Reifenlauffläche gezogen wird. Dadurch kann mit einem Arbeitsschritt zusätzlich zum Innenspannring auch bereits wenigstens ein Gleitschutzmittel positioniert werden.

Die wenigstens eine Befestigungsstelle kann zur Befestigung wenigstens eines Gleitschutzmittels am Montagebügel ausgebildet sein. Beispielsweise kann der Montagebügel an der Befestigungsstelle wenigstens eine Öse aufweisen, an der ein Gleitschutzmittel unverlierbar befestigt werden kann.

Gemäß einer weiteren vorteilhaften Ausgestaltung kann der Montagebügel wenigstens zwei im montierten Zustand in einer Umfangsrichtung voneinander beabstandete Befestigungsstellen aufweisen. Dadurch können beim Auflegen der Reifenkette in der zuvor beschriebenen Art wenigstens zwei Gleitschutzmittel, beispielsweise zwei Querstränge der Reifenkette, auf der Reifenlauffläche positioniert werden. Der Montagebügel kann beispielsweise zwei Schenkel aufweisen, von denen jeder mit wenigstens einer Befestigungsstelle versehen ist. Die beiden Schenkel können auch durch einen Steg voneinander beabstandet sein. Dann können die Befestigungsstellen am Steg oder an Übergangsbereichen vom Steg zu den Schenkeln angeordnet sein.

Der Montagebügel kann zwischen zwei Enden des Innenspannrings eingesetzt sein. Somit setzt der Montagebügel den Innenspannring fort. Dazu kann der Montagebügel Verbindungsstellen zur Befestigung der Enden des Innenspannrings aufweisen. Lediglich beispielhaft seien hier Ösen genannt, an denen die Enden des Innenspannrings befestigt werden können. Ist der Montagebügel zwischen zwei Enden des Innenspannrings eingesetzt, kann darauf verzichtet werden, den Innenspannring über eine Breite des Montagebügels in Umfangsrichtung fortzusetzen. Dadurch kann Material des Innenspannrings und zudem Gewicht gespart werden.

Die Enden des Innenspannrings können zumindest ein Stück weit in eine Durchführung des Montagebügels hineinragen, um dann an Verbindungsstellen des Montagebügels mit diesem verbunden zu sein. So kann ein Montagebügel sowohl eine Durchführung für den Innenspannring aufweisen, als auch zwischen den Enden des Innenspannrings eingesetzt sein.

Der Innenspannring kann durch die Durchführung beweglich sein. Insbesondere kann er frei beweglich durch die Durchführung durchgeführt sein. Dadurch kann erreicht werden, dass sich der Montagebügel relativ zum Innenspannring optimal positioniert.

Um bei einem Montagebügel mit einer Durchführung für den Innenspannring die Befestigung eines Gleitschutzmittels an dem Innenspannring zu ermöglichen, kann die Durchführung an wenigstens einer Stelle unterbrochen sein und wenigstens eine Befestigungsstelle freigeben.

Um ein geringes Packmaß der Reifenkette zu erreichen, kann der Montagebügel aus wenigstens zwei Teilen zusammengesetzt sein. Das heißt, der Montagebügel wird vor der Montage am Reifen durch Zusammenfügen der beiden Teile gebildet. Besonders vorteilhaft ist es, wenn die beiden Teile wieder voneinander lösbar sind, um die Reifenkette nach Gebrauch bei einem geringen Packmaß wieder zu verstauen.

Die wenigstens zwei Teile eines zusammengesetzten Montagebügels weisen bevorzugt komplementäre Verbindungselemente auf. Diese können beispielsweise durch Stifte und zu den Stiften komplementäre Öffnungen, durch Schnappverschlüsse, Rastverschlüsse oder andere geeignete Verbindungselemente gebildet sein.

Wenigstens eine Durchführung kann öffenbar sein, um die nachträgliche Montage eines Montagebügels an einer Reifenkette zu erleichtern.

Bevorzugt ist der Montagebügel des Nachrüstsatzes als Montagebügel für eine oben genannte Reifenkette ausgebildet.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der obigen Ausführungen entsprechend für einen bestimmten Anwendungsfall durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieser Merkmale in einem konkreten Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: eine schematische Seitenansicht eines Fahrzeugreifens mit einer erfindungsgemäßen Reifenkette, welche mit Montagebügeln einer ersten vorteilhaften Ausführungsform derselben versehen ist;
- Fig. 2: zeigt eine vergrößerte Darstellung der Montagebügel aus Fig. 1;
- Fig. 3: zeigt eine zweite vorteilhafte Ausführungsform vorteilhafter Montagebügel an einer Reifenkette;
- Fig. 4: zeigt eine dritte vorteilhafte Ausführungsform eines erfindungsgemäßen Montagebügels;
- Fig. 5: zeigt eine vierte vorteilhafte Ausführungsform eines erfindungsgemäßen Montagebügels;
- Fig. 6: zeigt eine fünfte vorteilhafte Ausführungsform eines erfindungsgemäßen Montagebügels in einem zusammengesetzten Zustand;
- Fig. 7: zeigt eine sechste vorteilhafte Ausführungsform eines Montagebügels in einem zusammengesetzten Zustand, die nicht zur Erfindung gehört;
- Fig. 8: zeigt ein Teil des zusammensetzbaren Montagebügels aus Fig. 7 in einer perspektivischen Darstellung;
- Fig. 9: zeigt Verbindungselemente der beiden Teile des Montagebügels aus Fig. 7 in einer Aufsicht vor der Verbindung;
- Fig. 10: zeigt die Verbindungsteile aus Fig. 9 in einem verbundenen Zustand;
- Fig. 11: zeigt eine siebte vorteilhafte Ausführungsform eines Montagebügels, die nicht zur Erfindung gehört;
- Fig. 12: zeigt eine achte vorteilhafte Ausführungsform eines erfindungsgemäßen Montagebügels in einer Aufsicht;
- Fig. 13: zeigt die achte Ausführungsform aus Fig. 12 in einem Querschnitt;
- Fig. 14: zeigt eine neunte vorteilhafte Ausführungsform eines erfindungsgemäßen Montagebügels mit einer öffenbaren Durchführung im geöffneten Zustand; und
- Fig. 15: zeigt die neunte Ausführungsform im geschlossenen Zustand.

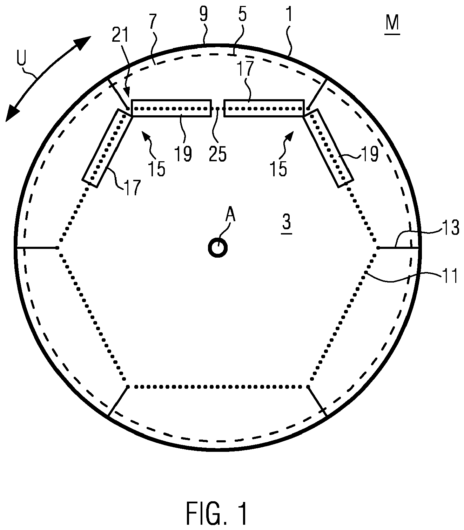

Im Folgenden ist eine Ausführungsform der erfindungsgemäßen Reifenkette 1 anhand der Fig. 1 beschrieben. Form und Aufbau der Reifenkette 1 sind lediglich beispielhaft gewählt. Fig. 1 zeigt dabei eine Seitenansicht auf die Innenseite 3 eines Fahrzeugreifens 5. Der Fahrzeugreifen 5 ist durch die gestrichelte Linie angedeutet. Die Reifenkette 1 ist dabei in einem am Fahrzeugreifen 5 montierten Zustand M dargestellt. Der Fahrzeugreifen 5 weist die Lauffläche 7 auf, auf der ein Laufnetz 9 der Reifenkette 1 aufliegen kann.

Die Lauffläche 7 erstreckt sich in einer Umfangsrichtung U des Fahrzeugreifens 5. Die Umfangsrichtung U verläuft kreisförmig um die Achse A. Im montierten Zustand M der Reifenkette 1 erstreckt sich auch zumindest das Laufnetz 9 der Reifenkette 1 kreisförmig um die Achse A, so dass die Umfangsrichtung U für die Reifenkette 1 und den Fahrreifen 5 identisch ist.

Die Reifenkette 1 weist einen Innenspannring 11 auf, welcher elastisch dehnbar ist. Bevorzugt ist der Innenspannring durch ein Gummiseil oder ein gummielastisches Seil gebildet. Alternativ dazu kann der Innenspannring 11 auch durch ein Seil oder eine Kette in Verbindung mit einem elastischen Element wie einem gummielastischen Seil oder einer Zugfeder gebildet sein. Der Innenspannring 11 ist durch die gepunktete Linie dargestellt. Da der Innenspannring 11 Teil der Reifenkette 1 ist, ist dieser mit dem Laufnetz 9 verbunden.

Bevorzugt ist der Innenspannring 11 über Gleitschutzmittel 13 mit dem Laufnetz 9 verbunden. Die Gleitschutzmittel 13 sind bevorzugt auch Teil des Laufnetzes 9 und können die Traktion des Fahrzeugreifens 5 verbessern. Die Gleitschutzmittel 13 können insbesondere Querstränge der Reifenkette 1 sein.

Eine Aufgabe des Innenspannrings 11 ist es, die Gleitschutzmittel 13 in Richtung zur Achse A hin zu spannen, damit die Reifenkette 1 gleichmäßig über die Lauffläche 7 des Reifens 5 verteilt ist. Eine weitere Aufgabe des Innenspannrings 11 ist die Montage der Reifenkette 1 an den Fahrzeugreifen 5. Bevorzugt wird zunächst ein Teil des Innenspannrings 11 an der Innenseite 3 des Reifens 5 angeordnet und dann die übrige Reifenkette 1 über den Reifen 5 gezogen.

Da es dabei unter Umständen vorkommen kann, dass sich der Innenspannring 11 wieder vom Fahrzeugreifen 5 löst, weist die erfindungsgemäße Reifenkette 1 wenigstens einen Montagebügel 15 auf. Das Ausführungsbeispiel der Fig. 1 ist beispielhaft mit zwei Montagebügeln 15 dargestellt.

Die Montagebügel 15 sind am Innenspannring 11 angebracht. Die Montagebügel 15 weisen eine Biegesteifigkeit auf, welche höher ist als die des Innenspannrings 11. Die Montagebügel 15 können starr sein. Alternativ dazu können diese auch biegsam sein, solange deren Biegesteifigkeit nicht die des Innenspannrings erreicht.

Die Montagebügel 15 unterstützen aufgrund ihrer gegenüber dem Innenspannring 11 erhöhten Biegesteifigkeit den Verbleib des Innenspannrings 11 an der Innenseite 3 des Reifens 5 während der Montage der Reifenkette 1 am Reifen 5.

Jeder der Montagebügel 15 weist zwei Schenkel 17 und 19 auf. Die beiden Schenkel 17 und 19 sind bevorzugt identisch und/oder spiegelbildlich zueinander ausgebildet. Die beiden Schenkel 17 und 19 sind bevorzugt in einem flachen Winkel zueinander angeordnet, so dass sie im Wesentlichen dem Verlauf des Innenspannrings 11 folgen können.

Alternativ dazu kann ein Montagebügel 15 auch bogenförmig gebildet sein. Wesentlich ist lediglich, dass die Kontur des Montagebügels 15 im Wesentlichen dem Verlauf des Innenspannrings 11 im montierten Zustand M folgt. Die Schenkel 17 und 19 stoßen an einem Scheitelpunkt 21 aneinander an. An diesem sind die Schenkel 17 und 19 miteinander verbunden oder gehen ineinander über.

Weist die Reifenkette 1 wenigstens zwei Montagebügel 15 auf, so sind diese bevorzugt in der Umfangsrichtung U hintereinander angeordnet.

Die Montagebügel 15 können mit wenigstens einer Befestigungsstelle 23 für Gleitschutzmittel 13 versehen sein. In der dargestellten ersten Ausführungsform ist bei jedem Montagebügel 15 eine Befestigungsstelle 23 im Scheitelpunkt 21 angeordnet. Die Befestigungsstellen 23 können dazu dienen, Gleitschutzmittel 13 mit einem Montagebügel 15 oder mit dem Innenspannring 11 zu verbinden. Bei den schematisch dargestellten Montagebügeln 15 der Fig. 1 sind die Gleitschutzmittel 13 jeweils in den Scheitelpunkten 21 der Montagebügel 15 mit dem Innenspannring 11 verbunden.

Die beiden Montagebügel 15 der ersten Ausführungsform sind mit in Umfangsrichtung U hintereinander folgenden Gleitschutzmittel 13 bzw. Quersträngen der Reifenkette 1 verbunden. Gleichzeitig sind von jedem Montagebügel 15 jeweils ein Schenkel 17, 19 an einem gemeinsamen Strangabschnitt 25 angeordnet.

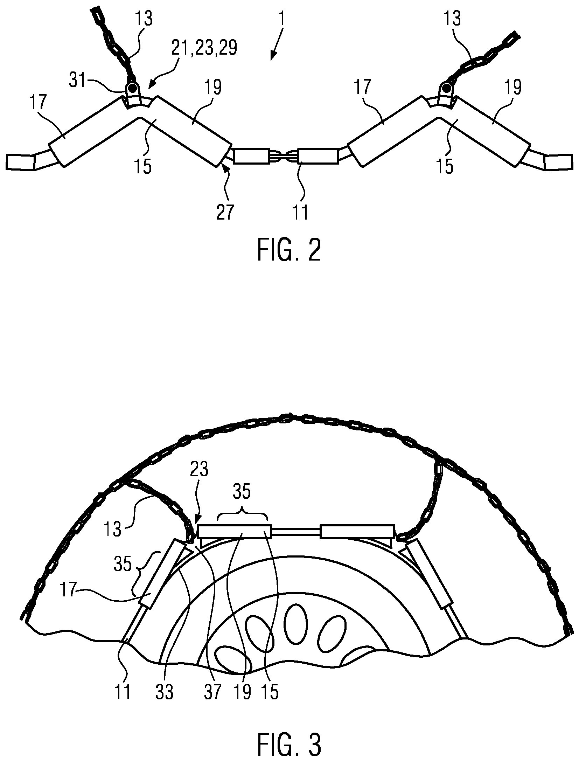

Fig. 2 zeigt eine detaillierte Darstellung einer vorteilhaften Ausführungsform von erfindungsgemäßen Montagebügeln 15. Die Ausführungsform der Fig. 2 entspricht der mit Bezug auf die Fig. 1 beschriebenen Ausführungsformen. Die Reifenkette 1, von der in Fig. 2 nur ein Ausschnitt dargestellt ist, weist zwei Montagebügel 15 auf. Der Einfachheit halber sind die Merkmale der Montagebügel 15 im Folgenden mit Bezug auf einen Montagebügel 15 beschrieben, da beide Montagebügel 15 der Reifenkette 1 identisch sind.

Der Montagebügel 15 weist zwei Schenkel 17 und 19 auf, die sich in einem flachen Winkel voneinander weg erstrecken und beide im Wesentlichen geradlinig verlaufen. Beiden Schenkel 17 und 19 sind monolithisch miteinander gebildet und gehen im Scheitelpunkt 21 des Montagebügels 15 ineinander über.

Die Schenkel 17 und 19 sind innen hohl und bilden eine Durchführung 27 durch den Montagebügel 15 für den Innenspannring 11. Durch die Durchführung 27 ist der Innenspannring 11 bevorzugt frei beweglich. Der Innenspannring 11 verläuft der Durchführung 27 folgend durch den gesamten Montagebügel 15.

Im Scheitelpunkt 21 ist der Innenspannring 11 von außen zugänglich. Die Durchführung 27 ist an einer Stelle 29 unterbrochen, welche im Scheitelpunkt 21 liegt. Die Stelle 29 gibt eine Befestigungsstelle 23 frei, an der ein Gleitschutzmittel 13, im diesem Fall ein Querstrang der Reifenkette 1, mit dem Innenspannring 11 verbunden ist. Das Gleitschutzmittel 13 weist dazu eine Schelle 31 auf, welche mit dem Innenspannring 11 an der Befestigungsstelle 23 verbunden ist.

Im Folgenden ist eine zweite vorteilhafte Ausführungsform der erfindungsgemäßen Reifenkette 1 anhand der Fig. 3 beschrieben. Der Kürze halber ist dabei im Wesentlichen auf die Unterschiede zu der mit Bezug auf die Fig. 1 und 2 beschriebenen Ausführungsform eingegangen.

Wie die zuvor beschriebene Ausführungsform weist die in Fig. 3 dargestellte Ausführungsform Montagebügel 15 mit einer Durchführung 27 für den Innenspannring 11 auf. An der Befestigungsstelle 23 ist der Innenspannring 11 zur Befestigung eines Gleitschutzmittels 13 zugänglich.

Die zweite Ausführungsform unterscheidet sich von der ersten Ausführungsform im Wesentlichen dadurch, dass die beiden Schenkel 17 und 19 zusätzlich zu ihrer Verbindung im Scheitelpunkt 21 über einen Stabilisierungsbogen 33 miteinander verbunden sind. Der Stabilisierungsbogen 33 verläuft zwischen den beiden Schenkeln 17 und 19 auf der der Befestigungsstelle 23 gegenüberliegenden Seite des Montagebügels 15.

Der Stabilisierungsbogen 33 ist dabei mit jeweils einem Ende an einem Mittenbereich 35 eines jeden Schenkels 17 und 19 angebracht. Der Stabilisierungsbogen 33 dient in erster Linie dazu, ein Auseinanderbiegen oder Zusammendrücken der beiden Schenkel 17 und 19 relativ zueinander zu vermeiden. Um die Stabilität des Montagebügels 15 weiter zu erhöhen, ist der Stabilisierungsbogen 33 in seiner Mitte über einen Befestigungssteg 37 mit dem Scheitelpunkt 21 der beiden Schenkel 17 und 19 verbunden.

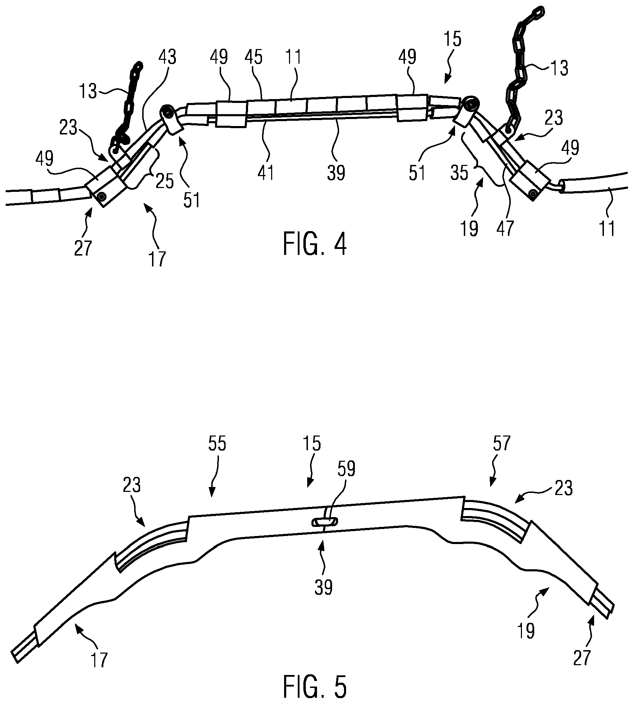

In Fig. 4 ist eine weitere vorteilhafte Ausführungsform eines erfindungsgemäßen Montagebügels 15 dargestellt. Der Montagebügel 15 weist die Schenkel 17 und 19 auf. Im Gegensatz zu den zuvor beschriebenen Ausführungsformen weist der in Fig. 4 dargestellte Montagebügel einen Steg 39 auf, durch welchen die Schenkel 17 und 19 voneinander beabstandet sind. Der Steg 39 verläuft gradlinig und weist an seinen sich gegenüberliegenden Enden die Schenkel 17 und 19 auf, die auch hier in einem flachen Winkel zueinander angeordnet sind. Der Montagebügel 15 weist zwei Befestigungsstellen 23 auf. Die Befestigungsstellen 23 sind in Mittenbereichen 35 der Schenkel 17 und 19 dadurch gebildet, dass der Innenspannring 11 an diesen Stellen für Gleitschutzmittel 13 zugänglich ist.

Der Montagebügel 15 weist eine Durchführung 27 für den Innenspannring 11 auf. Im Gegensatz zu den zuvor beschriebenen Ausführungsformen ist die Durchführung 27 jedoch nicht dadurch gebildet, dass die Schenkel 17 und 19 hohl sind. Stattdessen weist der Montagebügel 15 ein Gestänge 41 auf, welches im Wesentlichen durch miteinander verbundene Stangen 43, 45, 47 gebildet ist. Dabei bildet die Stange 43 den Schenkel 17, die Stange 45 den Steg 39 und die Stange 47 den Schenkel 19. Die Stangen 43, 45, 47 können monolithisch aus einer Stange gebildet sein oder aus einzelnen Stangen, welche zum Gestänge 41 verbunden wurden. Wenigstens eine der Stangen 43, 45, 47 kann elastisch sein, solange die Biegesteifigkeit höher ist als die des Innenspannrings 11.

Das Gestänge 41 ist mit Hülsen 49 versehen, durch die der Innenspannring 11 geführt ist, so dass die Hülsen 49 zumindest einen Teil der Durchführung 27 bilden. In den Übergangsbereichen 51 vom Steg 39 zu den Schenkeln 17 und 19 besitzt der Montagebügel 15 Schellen 53, welche ebenfalls so ausgebildet sind, dass der Innenspannring 11 durch diese durchgeführt werden kann. Die Schellen 53 gehören daher ebenfalls zur Durchführung 27.

Eine weitere vorteilhafte Ausführungsform eines Montagebügels 15 für eine erfindungsgemäße Reifenkette 1 (nicht dargestellt) ist in Fig. 5 gezeigt. Wie der mit Bezug auf die Fig. 4 beschriebene Montagebügel 15 weist der in Fig. 5 gezeigte Montagebügel 15 zwei Befestigungsstellen 23 für den Innenspannring 11 auf. Die Befestigungsstellen 23 sind in der Art ausgeführt, dass der Innenspannring 11, so er am Montagebügel 15 im montierten Zustand M angeordnet ist, für Gleitschutzmittel 13 der Reifenkette 1 zugänglich ist. Der Montagebügel 15 weist jedoch im Gegensatz zu der zuvor beschriebenen Ausführungsform kein Gestänge 41 auf, sondern ist hohl ausgeführt, so dass eine Durchführung 27 für den Innenspannring 11 gebildet ist. Dabei sind die Schenkel 17 und 19 und der Steg 39 hohl ausgeführt.

Der Montagebügel 15 ist am Steg 39 teilbar, so dass der Montagebügel 15 auseinandergenommen oder zusammengeklappt werden kann, wenn die Reifenkette 1 nicht benötigt wird. Dadurch kann Stauraum gespart werden. Der Montagebügel 15 besteht also aus den zwei Teilstücken 55 und 57, welche durch ein Verbindungsmittel 59 zusammengehalten werden können. Das Verbindungsmittel 59 kann beispielsweise ringförmig sein, so dass die beiden Teilstücke 55 und 57 zusammengeklappt werden können, ohne sie vollständig voneinander zu lösen. Bevorzugt sind die Teilstücke 55 und 57 identisch zueinander gebildet.

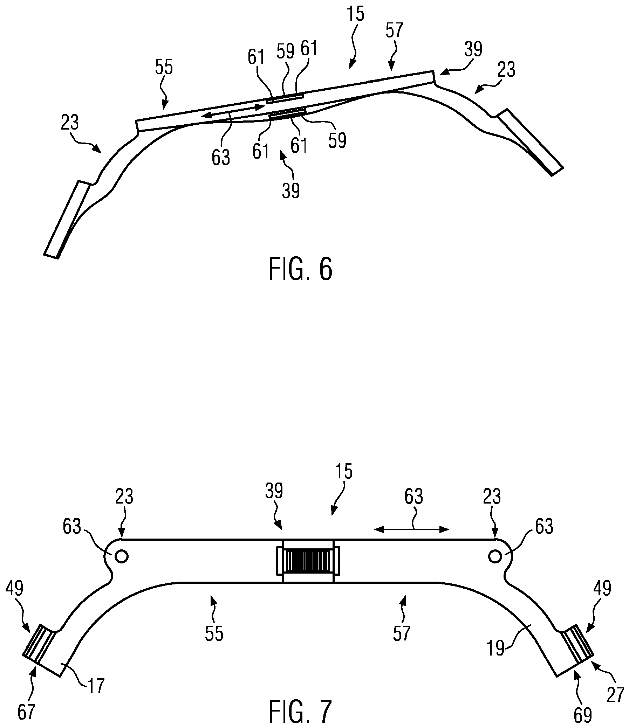

Fig. 6 zeigt eine weitere vorteilhafte Ausführungsform eines erfindungsgemäßen Montagebügels 15 mit zwei Befestigungsstellen 23 und einem Steg 39. Auch diese Ausführungsform ist aus zwei Teilstücken 55 und 57 zusammengesetzt, die in der Mitte des Stegs 39 durch Verbindungsmittel 59 miteinander verbunden sind. Im Gegensatz zu der zuvor beschriebenen Ausführungsform ist jedoch kein ringförmiges Verbindungsmittel 59 vorhanden. Stattdessen weist der Montagebügel 15 zwei stiftförmige Verbindungsmittel 59 auf, welche in zu den Verbindungsmitteln 59 komplementäre Öffnungen 61 in den Teilstücken 55 und 57 eingesetzt sind. Die Stücke 55 und 57 sind zusammensteckbar.

Um die Durchführung 27 für den Innenspannring 11 im Bereich des Stegs 39 durch die Verbindungsmittel 59 nicht zu stören, sind die Verbindungsmittel 59 und die Öffnungen 61 in einer Richtung quer zur Längsrichtung 63 des Steges 39 von der Durchführung 27 beabstandet.

Fig. 7 zeigt eine weitere vorteilhafte, jedoch nicht zur Erfindung gehörende Ausführungsform eines Montagebügels 15 für eine Reifenkette 1. Der Montagebügel 15 ist aus zwei Teilstücken 55 und 57 zusammengesetzt, welche durch zueinander komplementäre Verbindungsmittel 59 verbunden sind.

Der Montagebügel 15 weist eine Durchführung 27 auf, welche einen Innenspannring durch die Schenkel 17 und 19 und durch den Steg 39 führen kann. Im Gegensatz zu den zuvor beschriebenen Ausführungsformen sind die Befestigungsstellen 23 jedoch nicht dadurch gebildet, dass der Innenspannring 11 zur Verbindung mit Gleitschutzmitteln 13 an einer Stelle freigegeben ist, sondern es sind Befestigungsstellen 23 vorhanden, durch welche Gleitschutzmittel 13 am Montagebügel 15 befestigt werden können. Die Befestigungsstellen 23 sind durch Ösen 65 gebildet. Diese sind an den sich entlang der Steglängsachse 63 gegenüberliegenden Enden des Stegs 39 angeordnet.

Zwischen den Ösen 65 und den freien Enden 67 und 69 der Schenkel 17 und 19 ist der Montagebügel 15 nicht hohl, sondern der Innenspannring 11 kann freiliegend geführt werden. An den freien Enden 67 und 69 weist der Montagebügel 15 Hülsen 49 für den Innenspannring 11 auf.

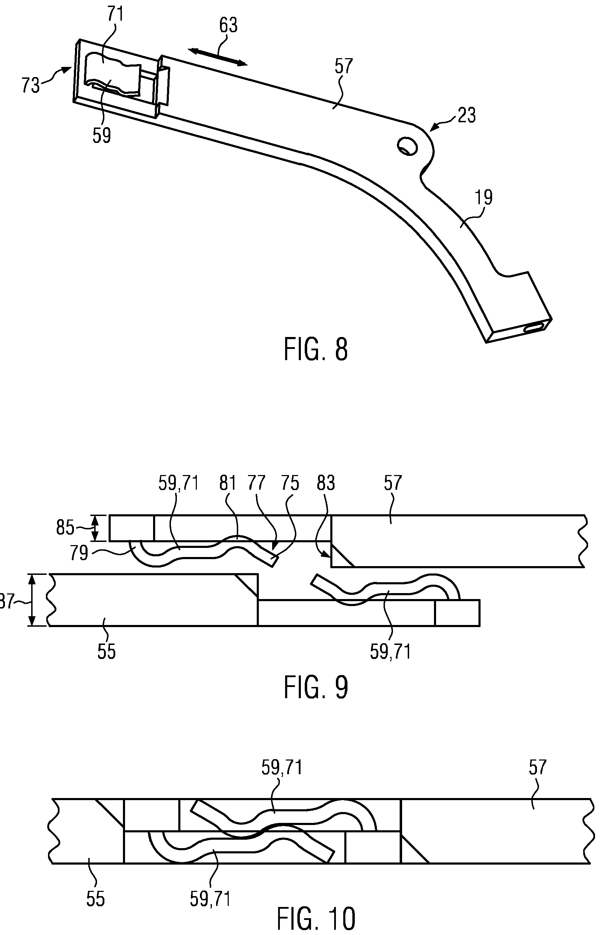

Als Verbindungsmittel 59 weist der Montagebügel 15 zwei Schnappverschlusslaschen 71 auf. Diese sind identisch ausgebildet. Bevorzugt sind die beiden Teilstücke 55 und 57 identisch ausgebildet. Ein einzelner Montagebügel 15 mit Blick auf eine Schnappverschlusslasche 71 ist in Fig. 8 dargestellt.

Die Fig. 9 und 10 zeigen die Bereiche der Teilstücke 55 und 57 um die Schnappverschlusslaschen 71 jeweils in einer Aufsicht einmal in einem unverbundenen Zustand (Fig. 9) und einem verbundenen Zustand (Fig. 10).

Im Folgenden ist der Aufbau eines Teilstücks 57 im Bereich um die Schnappverschlusslasche 71 mit Bezug auf die Fig. 8 und 9 beschrieben. Da beide Teilstücke 55 und 57 bevorzugt identisch zueinander gebildet sind, gilt die Beschreibung also auch für das Teilstück 55.

An dem vom Schenkel 19 weg weisenden Ende, welches im zusammengesetzten Zustand die Mitte des Stegs 39 bildet, weist das Teilstück 57 die Schnappverschlusslasche 71 auf. Die Schnappverschlusslasche 71 erstreckt sich von dem Ende 73 in Richtung der Befestigungsstelle 23 und verläuft dabei im Wesentlichen parallel zu der Steglängsrichtung 63.

An ihrem freien Ende 75 erstreckt sich die Schnappverschlusslasche 71 weg vom Teilstück 57, so dass eine Anlaufschräge 77 für die Schnappverschlusslasche 71 des Teilstücks 55 gebildet ist. Zwischen dem freien Ende 75 der Schnappverschlusslasche 71 und dem Ende 73 des Teilstücks 75, an der eine Basis 79 der Schnappverschlusslasche 71 angeordnet ist, weist die Schnappverschlusslasche 71 die Sicherungsschulter 81 auf. Die Sicherungsschulter 81 kann in einem nicht verbundenen Zustand an dem Teilstück 57 anliegen. Die Sicherungsschulter 81 ist gewölbt, wobei die Außenseite der Wölbung bzw. die geschlossene Seite zum übrigen Teilstück 57 weist und die Innenseite bzw. geöffnete Seite der Wölbung von außen zugänglich ist.

Bei einer Verbindung der beiden Teilstücke 55 und 57 können die beiden Schnappverschlusslaschen 71 mit ihren Anlaufschrägen 77 aneinander vorbei gleiten, bis sich die beiden Sicherungsschultern 81 gegenseitig passiert haben. Die beiden Schnappverschlusslaschen 71 können sich bei diesem Vorgang jeweils elastisch vom jeweiligen Teilstück 57 weg auslenken lassen.

Nach dem gegenseitigen Passieren der Sicherungsschultern 81 kommt jeweils die Sicherungsschulter 81 eines Teilstücks in dem Bereich zwischen der Sicherungsschulter 81 und der Basis 79 des anderen Teilstücks zum Liegen. Dieser Zustand ist in Fig. 10 dargestellt. Die beiden Teilstücke 55 und 57 sind dann miteinander verbunden.

Durch die Anordnung und den Aufbau der Schnappverschlusslaschen 71 sind die beiden Teile 55 und 57 durch Formschluss zwischen den Schnappverschlusslaschen 71 gegen einen Zug gesichert, welcher beide Teile 55 und 57 auseinander zu treiben strebt.

Um auch das Lösen der beiden Teile 55 und 57 durch einen aufeinander gerichteten Druck zu erschweren, weist jedes der Teile 55 und 57 einen Sicherungsanschlag 83 auf, welcher zwischen dem freien Ende der Schnappverschlusslasche 71 und der Befestigungsstelle 23 angeordnet ist. Der Anschlag 83 erstreckt sich dabei quer zur Steglängsrichtung 63 in dieselbe Richtung wie die Schnappverschlusslasche 71 und erstreckt sich dabei bevorzugt im Wesentlichen so weit wie die Schnappverschlusslasche 71 in dieser Richtung.

An dem Sicherungsanschlag 83 kann das Ende 73 des jeweils anderen Teilstücks anliegen, wenn die beiden Teilstücke 55 und 57 miteinander verbunden sind. Dieser Zustand ist in Fig. 10 gezeigt.

In dem Bereich zwischen dem freien Ende 73 und der Sicherungsanschlag 83 weist das Teilstück 57 bevorzugt eine Breite 85 auf, welche der halben Breite 87 des Steges 39 entspricht. Sind die beiden Teilstücke 55 und 57 miteinander verbunden, so weist der zusammengesetzte Montagebügel 15 im Bereich der Schnappverschlusslaschen 71 eine Breite auf, die nicht über die Breite 87 des Steges 39 hinausgeht. Dabei sind auch die Schnappverschlusslaschen 71 bevorzugt so ausgebildet, dass diese im miteinander verbundenen Zustand nicht über die Breite 87 des Steges 39 hinausragen.

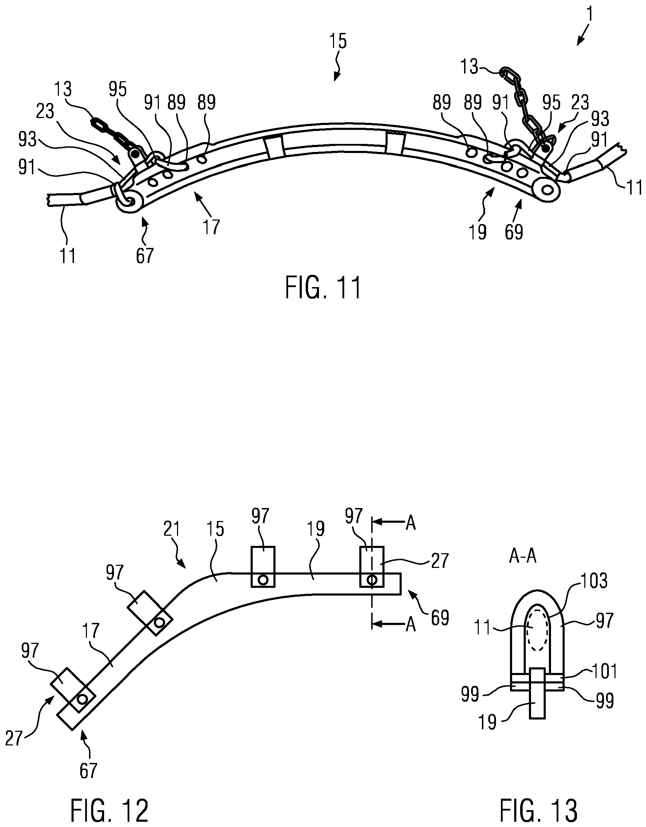

Eine weitere vorteilhafte, jedoch nicht zur Erfindung gehörende Ausführungsform eines Montagebügels 15 für eine Reifenkette 1 ist in Fig. 11 gezeigt.

Der Montagebügel 15 weist eine insgesamt teilkreisförmige Gestalt auf, wodurch sich ebenfalls Schenkel 17 und 19 ergeben. Die beiden Schenkel 17 und 19 sind als sich gegenüberliegende Teile des Teilkreises gebildet. An den sich in Umfangsrichtung U gegenüberliegenden Enden 67 und 69 weist der Montagebügel 15 eine Vielzahl von Ösen 89 auf. Die Ösen 89 können zur Verbindung mit dem Innenspannring 11 und/oder mit Gleitschutzmitteln 13 dienen.

In der dargestellten Ausführungsform sind an jedem Ende 67 und 69 jeweils zwei Haltemittel 91 in Ösen 89 eingesetzt, welche mit Enden 93 des Innenspannrings 11 verbunden sind. Die Haltemittel 91 sind dabei ringförmig ausgebildet.

Der Innenspannring 11 weist an seinen Enden 93 Schlaufen 95 auf. Die Schlaufen 95 sind in die Haltemittel 91 eingehängt. An jedem Ende 67, 69 des Montagebügels 15 ist die Schlaufe 95 bzw. das Ende 93 des Innenspannrings 11 durch ein Haltemittel 91 hindurchgeführt. Dabei ist das Haltemittel 91, durch das die Schlaufe 95 durchgeführt ist, weiter außen am Ende 69 bzw. 67 angeordnet, als das Haltemittel 91, in die die Schlaufe 95 eingehängt ist.

Die beiden Haltemittel 91 an jeweils einem Ende 67 und 69 des Montagebügels 15 sind in Ösen 89 angeordnet, welche voneinander beabstandet sind. Zwischen den beiden Haltemitteln jedes Endes 67 und 69 ist ein Gleitschutzmittel 13 in Form eines Querstrangs der Reifenkette 1 mit der Schlaufe 95 verbunden. Der Bereich zwischen den beiden Haltemitteln 91 stellt also eine Befestigungsstelle 23 für Gleitschutzmittel 13 dar. Bevorzugt ist die in Fig. 11 dargestellte Ausführungsform des Montagebügels 15 einstückig gebildet.

Eine weitere vorteilhafte Ausführungsform eines Montagebügels 15 für eine erfindungsgemäße Reifenkette 1 (hier nicht dargestellt) ist in den Figuren 12 und 13 gezeigt. Dabei zeigt Fig. 12 den Montagebügel 15 in einer Aufsicht und Fig. 13 den Montagebügel 15 in einem Querschnitt entlang der mit A-A in Fig. 12 markierten Schnittachse.

Wie auch die mit Bezug auf die Fig. 1 bis 3 beschriebenen Montagebügel 15, weist die achte Ausführungsform zwei miteinander verbundene und sich voneinander in einem flachen Winkel weg erstreckende Schenkel 17 und 19 auf. Die beiden Schenkel 17 und 19 sind bevorzugt einstückig miteinander gebildet.

Zur Verbindung mit dem Innenspannring 11 ist der Montagebügel 15 mit Durchleitungsbügeln 97 versehen, welche den Innenspannring 11 ähnlich wie die Hülsen 49 der mit Bezug auf die Fig. 7 beschriebenen Ausführungsform führen können.

Bevorzugt weist jeder Schenkel 17 und 19 zwei Durchleitungsbügel 97 auf, wobei jeweils ein Durchleitungsbügel 97 an einem freien Ende 67 beziehungsweise 69 der Schenkel 17 und 19 angeordnet ist. Bevorzugt sind die Durchleitungsbügel 97 vom Scheitelpunkt 21 des Montagebügels 15 beabstandet.

Die Durchleitungsbügel 97 weisen jeweils eine U Form auf, wobei die freien Schenkel 99 der U-Form einen Schenkel 17 oder 19 des Montagebügels 15 zwischen sich aufnehmen. Die beiden Schenkel 99 sind durch ein Verbindungsmittel 101 miteinander verbunden, welches auch den jeweiligen Schenkel 17 oder 19 des Montagebügels 15 durchdringt. Das Verbindungsmittel 101 ist bevorzugt eine Niete.

In dem freien Raum 103 zwischen den beiden Schenkeln 99 und dem jeweiligen Schenkel 17 oder 19 des Montagebügels 15 kann der Innenspannring 11 angeordnet sein. Dieser ist in Fig. 13 gestrichelt dargestellt. Die Durchleitungsbügel 97 bilden dabei die Durchführung 27 des Montagebügels 15.

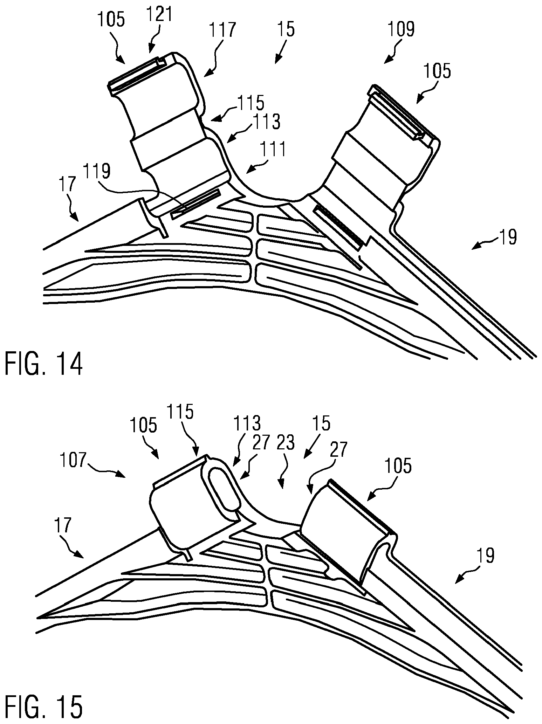

Im Folgenden ist eine weitere vorteilhafte Ausführungsform eines erfindungsgemäßen Montagebügels 15 anhand der Fig. 14 und 15 beschrieben. Der Kürze halber ist dabei nur auf die Merkmale eingegangen, welche sich im Vergleich zu den zuvor beschriebenen Ausführungsformen unterscheiden.

Der Montagebügel 15 weist an jedem Schenkel 17 und 19 öffenbare Hülsen 105 auf. Die Hülsen 105 entsprechen im Wesentlichen den Hülsen 49 bzw. den Durchleitungsbügeln 97 der vorher beschriebenen Ausführungsformen, wenn sie sich im in Fig. 15 gezeigten geschlossenen Zustand 107 befinden.

Im geschlossenen Zustand 107 bilden die Hülsen 105 Durchführungen 27 für den Innenspannring 11. Zwischen den Hülsen 105 ist ein Freiraum, welcher eine Befestigungsstelle 23 für ein Gleitschutzmittel darstellen kann. D.h., ist ein Innenspannring in der Durchführung 27 angeordnet, kann der Innenspannring 11 im Bereich der Befestigungsstelle 23 mit einem Gleitschutzmittel verbunden werden. Der Montagebügel 15 kann auch an den freien Schenkelenden 67 und 69 (hier nicht dargestellt) über öffenbare Hülsen 105 verfügen.

Fig. 14 zeigt die Hülsen 105 im geöffneten Zustand 109. Im geöffneten Zustand 109 lässt sich der Montagebügel 15 beispielsweise nachträglich an einer Reifenkette montieren. Die öffenbaren Hülsen 105 können daher die Montage und gegebenenfalls den Austausch des Montagebügels 15 erleichtern.

Die Hülsen 105 besitzen jeweils eine Basis 111, welche mit dem übrigen Montagebügel 15 verbunden ist. Bevorzugt ist die Basis 111 monolithisch mit dem übrigen Montagebügel 15 gebildet. Die Basis 111 geht in einen ersten Schenkel 113 der Hülse 105 über.

An den ersten Schenkel 113 schließt sich ein Scharnierabschnitt 115 ab, welcher bevorzugt elastisch gegenüber dem übrigen Montagebügel 15 ausgebildet ist. Der Schamierabschnitt 115 kann beispielsweise als Filmscharnier gebildet sein.

Im geöffneten Zustand 109 ist ein freies Ende der geöffneten Hülse 105 durch den zweiten Schenkel 117 gebildet. Im geschlossenen Zustand 107 ist der zweite Schenkel 117 dem ersten Schenkel 113 gegenüberliegend angeordnet. Die beiden Schenkel 113 und 117 sind so geformt, dass sich im geschlossenen Zustand 107 eine Durchführung 27 zwischen ihnen öffnet. Im geschlossenen Zustand 107 kann die Hülse 105 einen im Wesentlichen ovalen Querschnitt aufweisen.

Um die Hülsen 105 sicher im geschlossenen Zustand 107 zu halten, weisen der zweite Schenkel 117 und die Basis 111 komplementäre Verschlussmittel auf. An der Basis 111 ist eine Rastöffnung 119 angeordnet, welche sich bevorzugt durch das Material des Montagebügels 15 erstreckt. Am freien Ende des zweiten Schenkels 117 ist ein bevorzugt hakenförmiges Rastmittel 121 angeordnet, welches in die Öffnung 119 eingesetzt und in dieser verrastet werden kann.

### Bezugszeichen

- 1.: Reifen kette
- 3.: Innenseite des Reifens
- 5.: Fahrzeugreifen
- 7.: Lauffläche
- 9.: Laufnetz
- 11.: Innenspannring
- 13.: Gleitschutzmittel
- 15.: Montagebügel
- 17.: Schenkel
- 19.: Schenkel
- 21.: Scheitelpunkt
- 23.: Befestigungsstelle
- 25.: Stangenabschnitt
- 27.: Durchführung
- 29.: Stelle
- 31.: Schelle
- 33.: Stabilisierungsbogen
- 35.: Mittenbereich
- 37.: Befestigungssteg
- 39.: Steg
- 41.: Gestänge
- 43.: Stange
- 45.: Stange
- 47.: Stange
- 49.: Hülsen
- 51.: Übergangsbereich
- 53.: Schellen
- 55.: Teilstück
- 57.: Teilstück
- 59.: Verbindungsmittel
- 61.: Öffnungen
- 63.: Steglängsrichtung
- 65.: Ösen
- 67.: freies Ende
- 69.: freies Ende
- 71.: Schnappverschlusslaschen
- 73.: Ende des Teilstücks
- 75.: freies Ende
- 77.: Anlaufschräge
- 79.: Basis
- 81.: Sicherungsschulter
- 83.: Sicherungsanschlag
- 85.: Breite
- 87.: Stegbreite
- 89.: Öse
- 91.: Haltemittel
- 93.: Enden des Innenspannrings
- 95.: Schlaufe
- 97.: Durchleitungsbügel
- 99.: Schenkel des Durchleitungsbügels
- 101.: Verbindungsmittel
- 103.: Freier Raum
- 105.: Hülsen
- 107.: geschlossener Zustand
- 109.: geöffneter Zustand
- 111.: Basis
- 113.: erster Schenkel
- 115.: Scharnierabschnitt
- 117.: zweiter Schenkel
- 119.: Rastöffnung
- 121.: hakenförmiges Rastmittel

- A: Achse
- M: montierter Zustand
- U: Umfangsrichtung

## Patentansprüche

1. Reifenkette (1) für einen Fahrzeugreifen (5) eines Fahrzeugs mit einem elastisch dehnbaren Innenspannring (11), der bei montierter Reifenkette (1) an einer dem Fahrzeug zugewandten Innenseite (3) des Reifens (5) angeordnet ist, wobei der Innenspannring (11) an wenigstens einer Stelle mit einem Montagebügel (15) versehen ist, dessen Biegesteifigkeit gegenüber dem Innenspannring (11) erhöht ist, und wobei der Montagebügel (15) eine Durchführung (27) für den Innenspannring (11) aufweist, **dadurch gekennzeichnet, dass** die Durchführung (27) an wenigstens einer Stelle (29) unterbrochen ist und wenigstens eine Befestigungsstelle (23) für Gleitschutzmittel (13) freigibt.

2. Reifenkette (1) nach Anspruch 1, **dadurch gekennzeichnet, dass** der Montagebügel (15) zwei Schenkel (17, 19) besitzt.

3. Reifenkette (1) nach Anspruch 1 oder 2, **dadurch gekennzeichnet, dass** wenigstens zwei Montagebügel (15) in einer Umfangsrichtung (U) hintereinander angeordnet sind.

4. Reifenkette (1) nach einem der Ansprüche 1 bis 3, **dadurch gekennzeichnet, dass** die Reifenkette (1) Gleitschutzmittel (13) aufweist, die im montierten Zustand (M) auf einer Reifenlauffläche (7) aufliegen, wobei der Montagebügel (15) mit wenigstens einer Befestigungsstelle (23) für Gleitschutzmittel (13) versehen ist.

5. Reifenkette (1) nach Anspruch 4, **dadurch gekennzeichnet, dass** die wenigstens eine Befestigungsstelle (23) zur Befestigung wenigstens eines Gleitschutzmittels (13) am Montagebügel (15) ausgebildet ist.

6. Reifenkette (1) nach Anspruch 4 oder 5. **dadurch gekennzeichnet, dass** der Montagebügel (15) zwei im montierten Zustand (M) in Umfangsrichtung (U) voneinander beabstandete Befestigungsstellen (23) aufweist.

7. Reifenkette (1) nach Anspruch 6, **dadurch gekennzeichnet, dass** der Montagebügel (15) zwischen zwei Enden (93) des Innenspannrings (11) eingesetzt ist.

8. Reifenkette (1) nach Anspruch einem der Ansprüche 1 bis 7, **dadurch gekennzeichnet, dass** der Innenspannring 11 durch die Durchführung (27) beweglich ist.

9. Reifenkette (1) nach einem der Ansprüche 1 bis 8, **dadurch gekennzeichnet, dass** der Montagebügel (15) aus wenigstens zwei Teilen (55, 57) zusammengesetzt ist.

10. Reifenkette (1) nach Anspruch 9, **dadurch gekennzeichnet, dass** die wenigstens zwei Teile (55, 57) komplementäre Verbindungsmittel (59) aufweisen.

## Claims

1. Tyre chain (1) for a vehicle tyre (5) of a vehicle, comprising an elastically extensible inner tension ring (11) which is arranged on an inner side (3) of the tyre (5) facing the vehicle when the tyre chain (1) is mounted, the inner tension ring (11) being provided, at at least one point, with a mounting bracket (15) of which the bending stiffness is increased relative to the inner tension ring (11), and the mounting bracket (15) having a passage (27) for the inner tension ring (11), **characterised in that** the passage (27) is interrupted at at least one point (29) and exposes at least one attachment point (23) for anti-slip means (13).

2. Tyre chain (1) according to claim 1, **characterised in that** the mounting bracket (15) has two legs (17, 19).

3. Tyre chain (1) according to either claim 1 or claim 2, **characterised in that** at least two mounting brackets (15) are arranged one behind the other in a circumferential direction (U).

4. Tyre chain (1) according to any of claims 1 to 3, **characterised in that** the tyre chain (1) has anti-slip means (13) which rest on a tyre tread (7) in the mounted state (M), the mounting bracket (15) being provided with at least one attachment point (23) for anti-slip means (13).

5. Tyre chain (1) according to claim 4, **characterised in that** the at least one attachment point (23) is designed to attach at least one anti-slip means (13) to the mounting bracket (15).

6. Tyre chain (1) according to either claim 4 or claim 5, **characterised in that** the mounting bracket (15) has two attachment points (23) that are mutually spaced in the circumferential direction (U) in the mounted state (M).

7. Tyre chain (1) according to claim 6, **characterised in that** the mounting bracket (15) is inserted between two ends (93) of the inner tension ring (11).

8. Tyre chain (1) according to any of claims 1 to 7, **characterised in that** the inner tension ring 11 can be moved through the passage (27).

9. Tyre chain (1) according to any of claims 1 to 8, **characterised in that** the mounting bracket (15) consists of at least two parts (55, 57).

10. Tyre chain (1) according to claim 9, **characterised in that** the at least two parts (55, 57) have complementary connecting means (59).

## Revendications

1. Chaine à pneumatique (1) pour un pneumatique de véhicule (5), comprenant un anneau tendeur intérieur (11) à allongement élastique, qui, lorsque la chaine à pneumatique (1) est montée, est agencé sur le côté intérieur (3) du pneumatique (5), dirigé vers le véhicule, l'anneau tendeur intérieur (11) étant muni à au moins un endroit, d'un étrier de montage (15) dont la rigidité en flexion est augmentée par rapport à l'anneau tendeur intérieur (11), et l'étrier de montage (15) présente un passage traversant (27) pour l'anneau tendeur intérieur (11), **caractérisée en ce que** le passage traversant (27) est interrompu à au moins un endroit (29) et dégage au moins une zone de fixation (23) pour des moyens antidérapants (13).

2. Chaine à pneumatique (1) selon la revendication 1, **caractérisée en ce que** l'étrier de montage (15) possède deux branches (17, 19).

3. Chaine à pneumatique (1) selon la revendication 1 ou la revendication 2, **caractérisée en ce qu'**au moins deux étriers de montage (15) sont agencés de manière successive dans une direction périphérique (U).

4. Chaine à pneumatique (1) selon l'une des revendications 1 à 3, **caractérisée en ce que** la chaine à pneumatique (1) comporte des moyens antidérapants (13) qui, dans l'état monté (M), s'appuient sur une surface de roulement de pneumatique (7), l'étrier de montage (15) étant pourvu d'au moins une zone de fixation (23) pour moyens antidérapants (13).

5. Chaine à pneumatique (1) selon la revendication 4, **caractérisée en ce que** ladite au moins une zone de fixation (23) est conçue pour la fixation d'au moins un moyen antidérapant (13) à l'étrier de montage (15).

6. Chaine à pneumatique (1) selon la revendication 4 ou la revendication 5, **caractérisée en ce que** l'étrier de montage (15) comporte deux zones de fixation (23) espacées mutuellement dans la direction périphérique (U), dans l'état monté (M).

7. Chaine à pneumatique (1) selon la revendication 6, **caractérisée en ce que** l'étrier de montage (15) est inséré entre deux extrémités (93) de l'anneau tendeur intérieur (11).

8. Chaine à pneumatique (1) selon l'une des revendications 1 à 7, **caractérisée en ce que** l'anneau tendeur intérieur (11) est mobile à travers le passage traversant (27).

9. Chaine à pneumatique (1) selon l'une des revendications 1 à 8, **caractérisée en ce que** l'étrier de montage (15) est formé par l'assemblage d'au moins deux parties (55, 57).

10. Chaine à pneumatique (1) selon la revendication 9, **caractérisée en ce que** lesdites au moins deux parties (55, 57) présentent des moyens de liaison (59) complémentaires.
